# EUROPÄISCHE PATENTSCHRIFT

(11) **EP 3 650 753 B1**
(45) Veröffentlichungstag und Bekanntmachung des Hinweises auf die Patenterteilung: **09.11.2022**
(21) Anmeldenummer: 18205667.1
(22) Anmeldetag: 12.11.2018
(51) Int. Cl.: F23C 6/04

(54) **VERFAHREN UND VORRICHTUNG ZUR FLAMMENLOSEN STUFENVERBRENNUNG**
METHOD AND DEVICE FOR FLAMELESS STAGED COMBUSTION
PROCÉDÉ ET DISPOSITIF DE COMBUSTION ÉTAGÉE SANS INFLAMMATION

(43) Veröffentlichungstag der Anmeldung: 13.05.2020
(73) Patentinhaber: WS Wärmeprozesstechnik GmbH, 71272 Renningen (DE)
(72) Erfinder: Wünning, Joachim A., 71229 Leonberg (DE); Wünning, Joachim G., 71229 Leonberg (DE)
(74) Vertreter: Rüger Abel Patentanwälte PartGmbB

(56) Entgegenhaltungen:
- WO-A1-2009/035334
- DE-A1-102011 087 971
- DE-A1-102014 103 952
- US-A- 4 405 587

## Beschreibung

Die Erfindung betrifft ein Verfahren zur flammenlosen Stufenverbrennung und eine Vorrichtung dazu.

Aus der EP 0 698 764 A2 ist ein Brenner zur flammenlosen Verbrennung eines Brenngas/Luft-Gemisches zur Erwärmung von Wasser bekannt. Um eine flammenlose Oxidation in der Brennkammer aufrecht zu erhalten, ist zwischen einem Wassermantel und dem Brennkammerinneren eine Isolierung vorgesehen, um die zur flammenlosen Oxidation nötigen hohen Temperaturen in der Brennkammer erreichen zu können.

Aus der WO 01/11215 A1 ist eine Brennkammer für eine Gasturbine bekannt, wobei die Brennkammer mit gestufter Oxidation arbeitet. In der Brennkammer wird eine großräumige Zirkularströmung aufrechterhalten, in die Verbrennungsluft sparsam an verschiedenen Stellen zugegeben wird. Hierdurch soll eine extrem stabile Flamme erzielt werden.

Aus der US 7 062 917 B2 ist eine für Gasturbinen vorgesehene Brennkammer bekannt, die ebenfalls mit einer großräumigen Zirkularströmung arbeitet, jedoch auf einen stabilen flammenlosen Betrieb eingerichtet ist.

Die US 5 154 599 offenbart einen Brenner zur Beheizung einer Brennkammer mittels flammenloser Oxidation. In dem Brenner ist eine Brennkammer ausgebildet, in der eine Flamme gezündet werden kann. Dies dient der Vor- und Aufheizung des Ofenraums, d.h. zum Anfahren des Brenners. In stationärem Betrieb ist die Brennkammer inaktiv und die Oxidation des Brennstoffs findet ausschließlich in dem Ofenraum statt.

Aus der EP 1 995 515 B1 ist Beheizung einer Brennkammer mittels flammenloser Oxidation bei einer Temperatur bekannt, die unterhalb der sonst für flammenlose Oxidation nötigen 850°C liegt. Zur Erzeugung und Aufrechterhaltung der flammenlosen Oxidation weist der Brenner eine Brennkammer auf, in der eine Flamme stabil brennt. Das von der Brennkammer abgegebene heiße Abgas wird gemeinsam mit Luft und Brennstoff in den Ofenraum eingeleitet, in dem dann eine flammenlose Oxidation des Brennstoffs stattfindet.

Die US 3 309 866 beschreibt eine Gasturbine mit flammenlos oxidierender Brennkammer zur Oxidation eines Gas/Luft-Gemischs. Dazu ist eine torusförmige Brennkammer vorgesehen. Dieser Brennkammer wird ein aus einem Vergaser stammendes Gas/Luft-Gemisch zugeführt.

Weiter ist aus der US 5 727 378 eine Gasturbine bekannt, deren Brennkammer ein aus einer Zerstäubervorrichtung stammendes brennstoffreiches Gemisch und über viele Luftzuführöffnungen zusätzlich Luft erhält, so dass sich in der Brennkammer eine flammenfreie primäre Mischzone und nachgeschaltet eine Verbrennungszone ausbildet. Die Oxidation des Brennstoffs findet in der Verbrennungszone statt. Hingegen dient die Mischzone der Zerstäubung des Kraftstoffs. Die Flammenfront ist von der Mischzone weg verlagert.

In der US 6 234 092 B1 ist eine Vorrichtung zur thermischen Behandlung unbrennbarer Flüssigkeiten beschrieben, die mit flammenloser Oxidation arbeitet. In die mit flammenloser Oxidation beheizte Ofenkammer wird die thermisch zu behandelnde, nicht brennbare Flüssigkeit eingedüst.

Außerdem ist aus der DE 10 2011 087 971 A1 ein Heizgerät zur Nutzwärmeerzeugung bekannt, das eine Vorverbrennungskammer, eine Hauptverbrennungskammer und dazwischen einen Katalysator aufweist. Die Vorverbrennungskammer wird mit einer Kalte-Flamme-Verbrennung betrieben, in der langkettige Kohlenwasserstoffe gespalten werden. Ein Wärmetauscher hüllt sowohl die Hauptverbrennungskammer als auch teilweise die Vorverbrennungskammer ein.

Bei den mit flammenloser Oxidation arbeitenden, aus dem Stand der Technik bekannten Verbrennungsverfahren wird die Flammenbildung unterdrückt, womit auch die thermische NOx-Bildung vermieden wird. Zugleich ermöglichen entsprechend ausgebebildete Brenner die Luftvorwärmung, beispielsweise unter Nutzung von Abgasenergie, auf hohe Temperaturen, ohne dass dadurch eine thermische NOx-Bildung zu verzeichnen wäre. Jedoch ist eine Voraussetzung zur Sicherstellung einer flammenlosen Oxidation in einem Heizraum die Einhaltung einer Heizraumtemperatur, die oberhalb der Selbstzündtemperatur des verwendeten Brennstoffs zuzüglich eines Sicherheitszuschlags liegt. Im Folgenden wird unter der Bezeichnung "Selbstzündtemperatur" immer die eigentliche Selbstzündtemperatur zuzüglich eines Sicherheitszuschlags verstanden, der z.B. bei Erdgas etwa 150 Kelvin beträgt. Dies bedeutet bei üblichen Brennstoffen, wie beispielsweise Methan (Erdgas), dass die Heizraumtemperatur über 850°C liegen muss.

Bei vielen Anwendungsfällen sind derart hohe Heizraumtemperaturen nicht gewünscht, beispielsweise weil der Heizraum zur Erwärmung empfindlicher Güter dient und bestimmte Grenztemperaturen nicht überschreiten darf. Solche Anwendungsfälle sind z.B. die Trocknung von Gütern, das Anlassen von Metallgegenständen, das Hartlöten von Aluminium oder die anderweitige Wärmebehandlung von Metallen, insbesondere niedrigschmelzender Metalle oder die Dampferzeugung. Die Wärmeerzeugung für solche Prozesse beruht typischerweise auf Brenner mit Flammenhaltung, bei denen eine thermische NOx-Bildung unvermeidlich ist.

Es ist Aufgabe der Erfindung, ein Konzept zur NOx-armen Wärmeerzeugung für Niedertemperaturprozesse anzugeben.

Diese Aufgabe wird mit dem Verfahren nach Anspruch 1 gelöst und mit der Vorrichtung nach Anspruch 9 umgesetzt.

Das erfindungsgemäße Verfahren und die erfindungsgemäße Vorrichtung gestatten die Beheizung einer Heizkammer mit einer Temperatur, die auch unterhalb der Selbstzündtemperatur des verwendeten Brennstoffs (plus Sicherheitszuschlag) liegenden Temperatur, wobei zumindest ein großer Teil der verwendeten Wärmeenergie in einem flammenlosen Oxidationsprozess freigesetzt wird. Dazu wird ein wenigstens zweistufiger Oxidationsprozess vorgesehen, bei dem in einem ersten Schritt Brennstoff und Luft in nicht stöchiometrischem Verhältnis einer Brennkammer zugeführt und dort in flammenloser Oxidation zur Reaktion gebracht werden. Die Brennkammer ist im Wesentlichen adiabatisch eingerichtet, d.h., es wird ihr, bis auf unvermeidbare thermische Verluste, keine Wärmeenergie entzogen, insbesondere keine Nutzwärme ausgekoppelt. Die flammenlose Oxidation wird erreicht, indem in der Brennkammer eine großräumige Rezirkulationsströmung aufrechterhalten wird, wobei kleinräumige Wirbel, wie sie an flammenhaltenden Strukturen entstehen könnten, vermieden werden. Die Brennkammer weist keine Flammenhalter oder sonstige flammenhaltende Strukturen auf. Als flammenhaltende Strukturen werden alle Strukturen angesehen, die die Gaströmung soweit verlangsamen und kleinräumige stationäre Wirbel erzeugen können, sodass sich an der Struktur eine Flamme halten kann.

Die Temperatur wird in der Brennkammer oberhalb der Selbstzündtemperatur des verwendeten Brennstoffs eingestellt. Sie wird jedoch unterhalb einer Temperatur gehalten, bei der verstärkt die Bildung von Stickoxyden zu verzeichnen wäre. Die Einstellung solcher Verhältnisse erfolgt vorzugsweise über das Brennstoff/Luft-Verhältnis (kurz: Luftverhältnis λ) in der Brennkammer.

Der aus der Brennkammer entlassene Reaktionsgasstrom wird der Heizkammer zugeführt und dort bedarfsweise unter Zugabe von Luft und/oder Brennstoff vollständig oxidiert. Die Oxidation findet dabei vorwiegend in dem reaktionsfähigen Abschnitt des Reaktionsgasstroms statt, dessen Temperatur über der Selbstzündtemperatur des verwendeten Brennstoffs liegt. In der Heizkammer wird eine Zirkulationsströmung aufrechterhalten, bei der sich der Strom heißen Reaktionsgases mit dem kühleren in der Heizkammer enthaltenen Gasvolumen mischt. Damit können empfindliche Güter erwärmt oder Heizschlangen eines Dampferzeugers beheizt werden, ohne dass das zu erwärmende Gut oder der Dampferzeuger Schaden nehmen. Zugleich ist dafür Sorge getragen, dass eine thermische NOx-Erzeugung weitgehend unterbleibt. Insbesondere wird der Oxidationsprozess sowohl in der Brennkammer als auch in der Heizkammer so geführt, dass an keiner Stelle eine Temperaturgrenze überschritten würde, ab der verstärkt Stickoxydbildung zu verzeichnen ist, wie beispielsweise 1400°C.

Vorzugsweise wird die Oxidation in der Brennkammer stark unterstöchiometrisch oder stark überstöchiometrisch durchgeführt, wodurch die Temperatur zwar oberhalb der Selbstzündtemperatur des verwendeten Brennstoffs, dabei jedoch weit entfernt von der höheren, für die Bildung von Stickoxiden erforderlichen Temperatur gehalten werden kann. Beispielsweise kann die Temperatur in der Brennkammer über das Luftverhältnis auf Temperatur innerhalb eines Temperaturbereichs von zum Beispiel 1000°C bis 1300°C geregelt werden. Die Nachoxidation in der Heizkammer durch zusätzliche Lufteinleitung (bei unterstöchiometrischer Brennkammer) oder durch Brennstoffeinleitung (bei überstöchiometrischer Brennkammer) wird dabei ebenfalls vorzugsweise so geführt, dass die in der Nachoxidationszone auftretenden Temperaturen besagten Temperaturgrenzwert von 1300 bis 1440° C nicht überschreiten. Dazu werden die für die Nachoxidation erforderliche Luft und/oder der erforderliche Brennstoff möglichst großräumig verteilt in den Strahl aus Reaktionsgasen eingeleitet, der aus der Brennkammer kommt. Die großräumige Verteilung von Luft- oder Brennstoff in diesen Strahl kann erreicht werden, indem dazu mehrere Brennstoff- und/oder Luftdüsen vorgesehen werden und/oder indem die in Strömungsgeschwindigkeiten und Impulse des Reaktionsgasstroms sowie für die Nachoxidation erforderlichen Brennstoffstroms oder Luftstroms so aufeinander abgestimmt werden, dass eine Verteilung der Luft oder des Brennstoffs in dem Reaktionsgasstrahl erreicht wird, bevor eine lokale vollständige Oxidation erfolgen kann.

Vorzugsweise wird in der Brennkammer ein adiabatischer Prozess mit flammenloser Teilverbrennung des eingesetzten Brennstoffs geführt. Die in der Brennkammer erzeugte Wärme wird allein von dem Brenngasstrom aus der Brennkammer heraus- und der Heizkammer zugeführt. Während aus der Brennkammer keine Nutzwärme entnommen wird, dient die nachgeschaltete Heizkammer der Auskopplung der Nutzwärme.

Beim Betrieb der Wärmeerzeugungseinrichtung erfolgt eine Temperaturregelung der Brennkammer vorzugsweise über die geeignete Festlegung und Einstellung des Verhältnisses zwischen dem zugeführten Brennstoffstrom und dem zugeführten Luftstrom. Dies kann auf Basis der Massenströme oder auch der Volumenströme erfolgen.

Im Volllastbetrieb wird die Brennkammer vorzugsweise unterstöchiometrisch betrieben, wobei einer Erhöhung der Temperatur durch eine Verminderung des Luftverhältnisses λ entgegengewirkt wird. Im Teillastbetrieb kann die Brennkammer auch überstöchiometrisch betrieben werden, wobei einer Erhöhung der Temperatur dann vorzugsweise durch eine Erhöhung des Luftverhältnisses λ begegnet wird.

Der Übergang von unterstöchiometrischem zu überstöchiometrischem Betrieb, zum Beispiel zur Anpassung an einen Lastwechsel, wird vorzugsweise unter Meidung eines Bereichs für das Luftverhältnis λ vollzogen, der in der Nähe von λ=1 liegt. Beispielsweise kann um λ=1 herum ein Bereich, zum Beispiel von λ=0,8 bis λ=1,6 festgelegt sein, in dem die Steuereinrichtung keinen dauerhaften Betrieb zulässt. Dieser Bereich ist hier lediglich beispielhaft genannt und kann brennstoffabhängig unterschiedlich festgelegt sein.

Durch Meidung eines solchen Betriebsbereichs können eine Überhitzung der Brennkammer und somit auch eine unerwünschte NOx-Erzeugung wirksam vermieden werden.

Bei dem erfindungsgemäßen Verfahren und der erfindungsgemäßen Einrichtung wird die zu erzeugende Wärmeleistung vorzugsweise vorwiegend in der adiabatisch betriebenen Brennkammer erzeugt, in der der Brennstoff flammenlos oxidiert wird. Dies erfolgt vorzugsweise unterstöchiometrisch, weil sich dadurch gegenüber dem überstöchiometrischen Betrieb ein geringerer Gasvolumenstrom ergibt. Die adiabate Reaktionstemperatur des zugeführten Brennstoff/Luft-Gemisches wird vorzugsweise unter einem Grenzwert von zum Beispiel 1400°C gehalten. Ist der Brennstoff Erdgas, liegt das Luftverhältnis λ beispielsweise in der Nähe von 0,5. Die mittlere Gastemperatur in der Brennkammer liegt dann deutlich unter dem genannten Grenzwert.

In der nachgeschalteten Heizkammer werden die heißen Reaktionsgase aus der Brennkammer und Luft oder Brennstoff so zugeführt, dass in der Heizkammer eine großräumige Rezirkulationsströmung ausgebildet wird, in der vorzugsweise eine flammenlose Verbrennung stattfindet. Die hohe Temperatur der Reaktionsgase aus der Brennkammer sichert die Verbrennung in der Heizkammer, obwohl die Temperatur des wärmeaufnehmenden Mediums oder der zu erwärmenden Gütern sowie auch die durchschnittliche Heizraumtemperatur unter der Selbstzündtemperatur des verwendeten Brennstoffs liegt. In dem Heizraum wird im Anschluss an den Reaktionsgasübertritt aus der Brennkammer eine Zone erhöhter Temperatur aufrechterhalten, die über der Selbstzündtemperatur des Brennstoffs liegt und die von Zonen niedrigerer Temperatur umgeben ist, deren Temperaturen unter der Selbstzündtemperatur liegen.

Das erfindungsgemäße Verfahren eignet sich auch zur Verbrennung von sogenannten Schwachgasen, die insbesondere bei wechselnder Zusammensetzung Schwierigkeiten bei der Flammenstabilisierung bereiten.

In der Zeichnung sind Ausführungsbeispiele einer erfindungsgemäßen Einrichtung veranschaulicht. Es zeigen:
Figur 1 eine erfindungsgemäße Einrichtung, in schematischer Darstellung,
Figur 2 eine abgewandelte erfindungsgemäße Einrichtung, in schematischer Darstellung,
Figur 3 Brennkammer und Heizkammer einer erfindungsgemäßen Einrichtung, in schematischer Längsschnittdarstellung,
Figur 4 ein Diagramm zur Verdeutlichung der Lastregelung der Einrichtung nach Figur 1 bis 3.

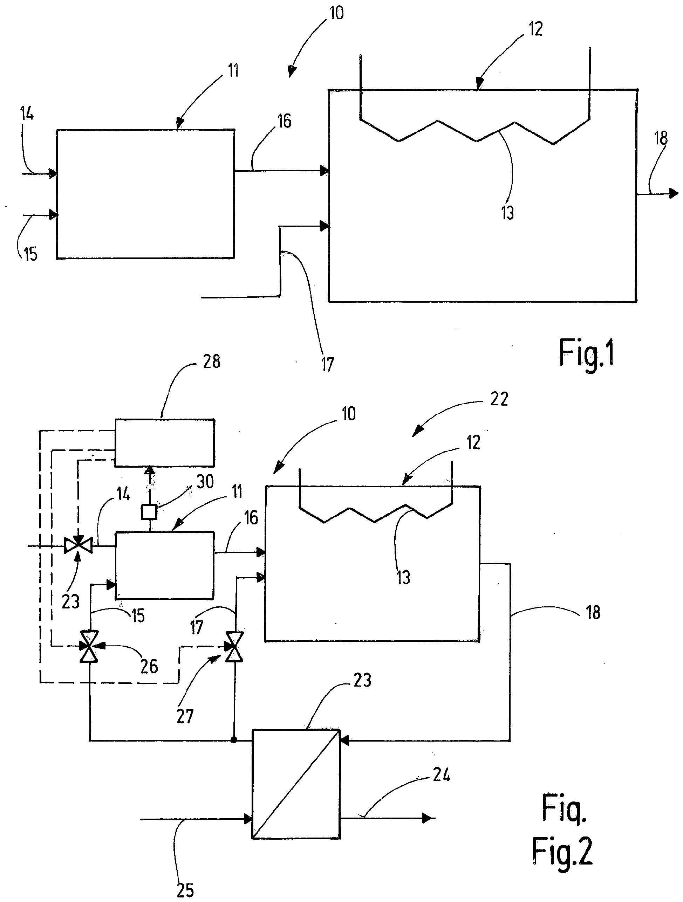

Zur Verdeutlichung des erfindungsgemäßen Verfahrens wird auf die Einrichtung 10 nach Figur 1 verwiesen, die eine gegen Wärmeverluste thermisch isolierte Brennkammer 11 und eine Heizkammer 12 enthält, an der Nutzwärme entnommen werden kann. Die Wärmeauskopplung aus der Heizkammer 12 kann durch Wärmeentnahme, beispielsweise über eine Heizschlange 13, in der ein Wärmeträgerfluid erhitzt oder verdampft wird, oder andere technische Mittel erfolgen. Beispielsweise kann die Heizkammer 12 zur Trocknung von Produkten, zur Erwärmung von Produkten, beispielweise zum Löten oder zu anderen Zwecken genutzt werden, die eine Erwärmung von Fluiden oder Gegenständen auf moderate Temperaturen erfordern, die unterhalb der Selbstzündtemperatur eines verwendeten Brennstoffs liegen können, zum Beispiel 850°C.

Der Brennkammer 11 werden über eine Brennstoffleitung 14 und eine Luftleitung 15 Brennstoff und Luft zugeführt. Das Verhältnis von Brennstoff und Luft ist dabei so festgelegt, dass das Luftverhältnis λ≠1 ist. Vorzugsweise ist λ deutlich kleiner als 1, d.h., es wird mit Brennstoffüberschuss gearbeitet. Zur Einleitung der Oxidation in der Brennkammer 11 ist diese vorzugsweise mit einer nicht weiter veranschaulichten Zündeinrichtung, beispielsweise mit einer Funkenzündeinrichtung oder einem Pilotbrenner versehen. Dieser kann im Dauerbetrieb laufen oder nach der Etablierung der flammenlosen Oxidation in der Brennkammer 11 auch abgeschaltet werden.

Vorzugsweise weist die Wandung der Brennkammer 11 einen hohen Wärmewiderstand auf. Zum Beispiel kann die Brennkammer 11 mit Keramik ausgekleidet sein oder aus Keramik bestehen. Auf diese Weise sollte nach dem Zünden des Brennstoffs in der Brennkammer 11 ein schnelles Aufheizen derselben und ein schnelles Erreichen einer Betriebsart mit flammenloser Oxidation ermöglicht werden.

Die in der Brennkammer 11 entstehenden Reaktionsgase werden über einen Reaktionsgasübertritt 16 in die Heizkammer 12 eingeleitet. Außerdem werden über eine Leitung 17 Luft und/oder Brennstoff in die Heizkammer 12 eingeleitet, um sich dort mit den heißen Reaktionsgasen zu vermischen und eine vollständige Oxidation des eingesetzten Brennstoffs zu bewirken. Die Heizkammer 12 ist vorzugsweise wesentlich größer als die Brennkammer 11, wobei sich in der Heizkammer 12 eine mittlere Temperatur einstellt, die wesentlich niedriger ist als in der Brennkammer 11 und die vorzugsweise auch unter der Selbstzündtemperatur des verwendeten Brennstoffs liegen kann. Die entstehenden Abgase werden über eine Leitung 18 aus der Heizkammer 12 ausgeleitet.

Vorzugsweise wird die Brennkammer 11 in einem Temperaturbereich betrieben, der wenigstens so hoch ist, dass die Selbstzündtemperatur des verwendeten Brennstoffs überschritten ist, wobei sie jedoch zugleich so niedrig ist, dass Stickoxyderzeugung nahezu vollständig unterdrückt wird. Der nutzbare Temperaturbereich der Brennkammer 11 kann zum Beispiel so festgelegt sein, dass die untere Temperaturgrenze zwischen 850°C und 1100°C liegt, während die obere Temperaturgrenze zum Beispiel zwischen 1100°C und 1300°C liegt und beispielsweise 1200°C beträgt. Der gewünschte Temperaturbereich wird vorzugsweise durch entsprechende Festlegung oder Regulierung des Luftverhältnisses λ eingestellt. Die Brennkammer 11 arbeitet dabei z.B. (und vorzugsweise) mit Luftunterschuss. Damit lassen sich relativ kleine Bauformen der Brennkammer 11 erreichen. Außerdem steht der Impuls der über die Leitung 17 zuzuführenden, für die vollständige Oxidation erforderlichen Sekundärluft für die Etablierung einer großräumigen und ausreichend schnellen Rezirkulationsströmung in der nachgeschalteten Heizkammer 12 zur Verfügung.

Die Temperatur in der Brennkammer 11 hängt bei adiabatem Betrieb nur vom Brennstoff/Luft-Verhältnis, d.h., dem Luftverhältnis und somit vom Querschnittsverhältnis der Lufteinlassdüsen der Brennkammer 11 und der Sekundärluftdüsen der Heizkammer 12 ab. Bei einem Verhältnis von zum Beispiel 1:1, was einem Luftunterschuss von ca. 50% entspricht, stellt sich bei Erdgas als Brennstoff in der nahezu adiabaten Brennkammer 11 eine Temperatur von ca. 1100°C ein. Es kann darüber hinaus eine Temperaturregelung etabliert werden, die die Stöchiometrie, d.h., das Luftverhältnis in der Brennkammer 11 beeinflusst, um die Temperatur in der Brennkammer 11 innerhalb eines gewünschten Bereiches zu halten. Dies ist insbesondere bei Verwendung von Schwachgasen mit wechselndem Heizwert als Brennstoff zweckmäßig. Es kann dann die Temperatur der Brennkammer 11 über das Luftverhältnis λ geregelt werden.

Die Regelung der Temperatur der Brennkammer 11 durch geeignete Festlegung der Stöchiometrie (des Luftverhältnisses λ) lässt sich auch für den Kaltstart anwenden, sodass die Brennkammer 11 schnell auf die gewünschte Betriebstemperatur von zum Beispiel 1000°C gebracht werden kann. Zum Kaltstart kann die Brennkammer 11 beispielsweise in stöchiometrischen Betrieb (λ=1) betrieben werden, bis die gewünschte Temperatur erreicht ist, wonach der Betrieb unterstöchiometrisch fortgesetzt wird. Um in der Brennkammer 11 den gewünschten flammenlosen Betrieb zu ermöglichen, ist die Brennkammer 11 auf die Ausbildung eines großräumigen Rezirkulationswirbels eingerichtet. Flammenhaltende Strukturen sind hingegen nicht vorhanden. In der Brennkammer 11 können dazu geeignete Strömungsleiteinrichtungen angeordnet werden, die die Ausbildung einer Rezirkulationsströmung fördern.

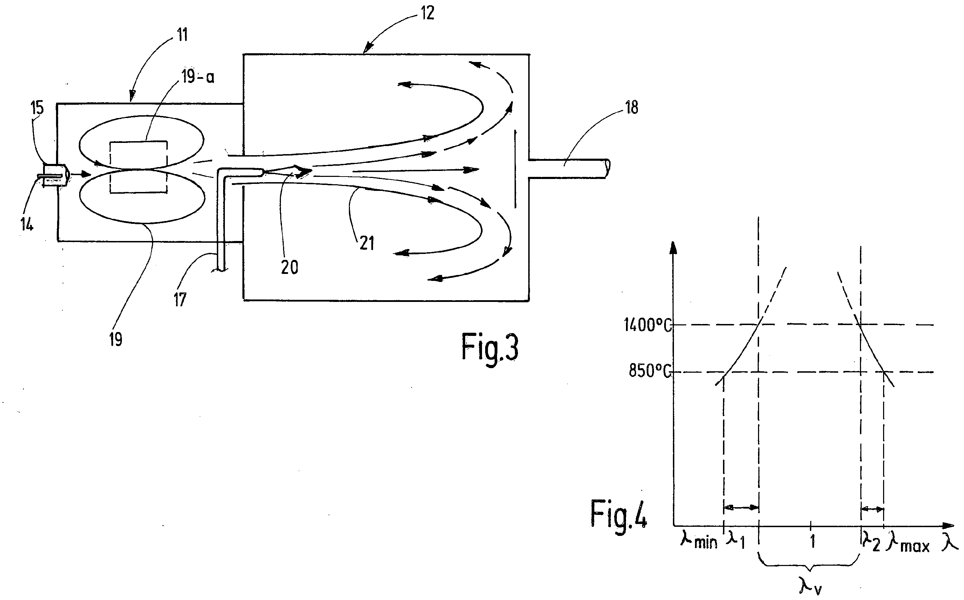

Flammenloser Betrieb kann bedarfsweise auch in der nachgeschalteten Heizkammer 12 realisiert werden, obwohl deren Temperatur im Bereich der wärmeauskoppelnden Strukturen, z.B. der Heizschlange 13, niedriger als die Selbstzündtemperatur des verwendeten Brennstoffs ist. Es wird dazu auf Figur 3 verwiesen, in der ein schematischer Längsschnitt der Brennkammer 11 und der Heizkammer 12 veranschaulicht ist. In der Brennkammer 11 wird mittels einer Leiteinrichtung, zum Beispiel in Gestalt eines Hohlzylinders, ein Rezirkulationswirbel 19 etabliert, in dem Brennstoff unterstöchiometrisch oxidiert wird. Die über die Leitung 17 in die Heizkammer 12 eingeblasene Luft 20 überträgt ihren Impuls auf einen Gasstrahl 21, der aus den aus der Brennkammer 11 ausgeleiteten Reaktionsgasen besteht. In dieser Zone kann in dem sich ausbildenden Gasstrahl 21 eine flammenlose Oxidation der im Gasstrahl 21 noch vorhandenen Brennstoffe erfolgen, wodurch eine weitere Wärmefreisetzung erfolgt. Der Gasstrahl 21 mischt sich im Rahmen seiner Rezirkulation in der Heizkammer 12 jedoch mit dort vorhandenem kühleren Restgas und bildet damit kühlere Zonen, sodass die Durchschnittstemperatur in der Heizkammer 12 trotz zusätzlicher Energiefreisetzung in dem Gasstrahl 21 unter der Selbstzündtemperatur des verwendeten Brennstoffs, zum Beispiel unterhalb von 850°C, liegen kann.

Die Einrichtung 10 und das anhand derselben erläuterte Verfahren haben gegenüber konventionellen insbesondere auf dem Betrieb mit Flamme beruhenden Heizeinrichtungen und Heizverfahren zahlreiche Vorteile. Durch Betrieb der Brennkammer 11 in flammenloser Oxidation und vorzugsweise auch der Heizkammer 12 mit flammenloser Oxidation können die thermische NOx-Bildung nahezu vollständig unterdrückt und somit Werte von unterhalb 10 mg/m³ erreicht werden. Dies gilt unabhängig von der Temperatur der zur Wärmeauskopplung dienenden Zonen der Heizkammer 12, die auch unterhalb der Selbstzündtemperatur des verwendeten Brennstoffs, beispielsweise unter 850°C liegen kann.

Bei Verwendung von Schwachgasen mit wechselndem Heizwert, lassen sich sonst vorhandene Probleme der Flammenstabilisierung durch den Betrieb der Brennkammer 11 mit flammenloser Oxidation vermeiden. Es zeigt sich, dass die Brennkammer 11 in einfacher Weise an unterschiedliche Leistungsbereiche von 10 kW bis zu einigen MW baugleich und kostengünstig angepasst werden kann.

In der ohne Wärmeauskopplung betriebenen Brennkammer 11 kann die Temperatur auch bei Teillast annähernd konstant gehalten werden, sodass sich ohne besonderen Aufwand ein großes Regelverhältnis ergibt.

Wenn die Brennkammer 11 mit einer wärmedurchgangshemmenden Auskleidung, zum Beispiel einer Keramikauskleidung, versehen ist oder selbst auf Keramik oder einem anderen Material mit einem hohen Wärmeleitwiderstand besteht, kann die Brennkammer 11 schon beim Kaltstart flammenlos arbeiten. Mit der Technik der flammenlosen Oxidation werden lokale Temperaturspitzen in Flammen vermieden, was sich sowohl auf die Brennkammer 11 als auch die Heizkammer 12 materialschonend auswirkt.

In Figur 2 ist eine auf der Einrichtung 10 nach Figur 1 und 3 beruhende Anlage 22 veranschaulicht, zu deren Beschreibung unter Zugrundelegung der bereits eingeführten Bezugszeichen auf die vorige Beschreibung verwiesen wird. Bei der Anlage 22 ist an die Abgasleitung 18 ein Wärmetauscher 23 angeschlossen, der der Luftvorwärmung dient und an einem Auslass 24 abgekühltes Abgas abgibt. Der Wärmetauscher 23 erwärmt über einen Frischlufteinlass 25 zugeführte Frischluft und gibt diese an die Leitungen 15 und/oder 17 erwärmt ab. In zumindest einer der Leitungen 15, 17 kann eine Durchflussreguliereinrichtung 26, 27 zum Beispiel in Gestalt eines Schiebers, eines Ventils, eines Gebläses oder ähnlicher, die Strömungsgeschwindigkeit beeinflussenden Mittel vorgesehen sein. Die Durchflussreguliereinrichtungen 26, 27 sind an eine Steuerung 28 angeschlossen. Diese ist im Weiteren mit einer Durchflussreguliereinrichtung 29 verbunden, die in der Leitung 14 angeordnet ist, um den Brennstoffzustrom zu der Brennkammer 11 zu regulieren. Die Durchflussreguliereinrichtung 29 kann wiederum ein Schieber, ein Ventil, eine Pumpe, ein Gebläse oder dergleichen sein.

Die Brennkammer 11 kann mit einem Temperatursensor 30 versehen sein, der mit der Steuerung 28 verbunden ist. Eine Aufgabe des Temperatursensors 30 ist die Überwachung des Betriebs der Brennkammer 11, an der herkömmliche Flammensensoren wegen der bei flammenloser Oxidation fehlenden Flammen nicht einsetzbar sind. Vorzugsweise ist der Temperatursensor ein "schneller" Sensor, das heißt er weist eine besonders geringe thermische Trägheit auf.

Bei der Anlage nach Figur 2 wird die der Brennkammer 11 und/oder der Heizkammer 12 zugeführte Luft von dem Wärmetauscher 23 vorgewärmt. Der Wärmetauscher 23 ist allerdings optional, es sind auch Ausführungsformen möglich, die ohne diesen Wärmetauscher und somit ohne Luftvorwärmung für die Heizkammer 12 und insbesondere auch ohne Luftvorwärmung für die Brennkammer 11 auskommen. Die für die flammenlose Oxidation notwendige Temperatur in der Brennkammer 11 resultiert dann aus der fehlenden Nutzwärmeauskopplung, d.h., der thermischen Isolationen der Brennkammer 11.

Die in Figur 2 veranschaulichte Anlage 22 kann beispielsweise wie folgt arbeiten:

Es wird zunächst ein Volllastbetrieb veranschaulicht. Dazu stellt die Steuerung 28 mittels der Durchflussreguliereinrichtung 29 den Brennstoffstrom entsprechend der gewünschten Leistung ein und reguliert dann mittels der Durchflussreguliereinrichtung 26 den Luftstrom, d.h., das Luftverhältnis so, dass die Temperatur in der Brennkammer 11 in einen gewünschten Arbeitsbereich zum Beispiel zwischen 850°C und 1300°C, beispielsweise bei etwa 1100°C liegt. Dabei stellt sich in der Brennkammer 11 flammenlose Oxidation ein. Mittels des Temperatursensors 30 erfasst die Steuerung 28 die Temperatur und reduziert den Luftstrom in der Luftleitung 15, wenn die Temperatur über ein gewünschtes Maß hinaus ansteigt und sie vergrößert den Luftstrom, wenn die Temperatur zu weit absinkt. Die Temperaturregelung erfolgt somit über eine Veränderung des Luftverhältnisses λ, im unterstöchiometrischen Bereich. Dies ist in Figur 4 auf dem rechten Abschnitt der Abszisse zu sehen. Die Steuerung 28 ist dabei außerdem darauf eingerichtet, einen Grenzwert von λ₁ in diesem Regelbereich nicht zu überschreiten, um somit eine übermäßige Temperaturerhöhung und somit die Erzeugung von Stickoxyd zu vermeiden. Die Steuerung 28 gibt zugleich mit der Durchflussreguliereinrichtung 27 den Luftstrom in der Leitung 17 soweit frei, dass in der Heizkammer 12 der in dem Gasstrahl 21 vorhandene Restbrennstoff mit der Luft 20 vollständig oxidiert wird. Die Oxidation findet vorzugsweise flammenlos innerhalb des Gasstrahls 21 statt. Dieser heizt die Heizkammer 12 obwohl er selbst eine Temperatur aufweist, die oberhalb der Selbstzündtemperatur des Brennstoffs liegt, auf eine Temperatur auf, die unterhalb der Selbstzündtemperatur des verwendeten Brennstoffs liegt. Auch in der Heizkammer 12 ist dadurch keine thermische NOx-Bildung zu verzeichnen.

Bei Übergang in Teillastbetreib reduziert die Steuerung 28 den Brennstoffzustrom mittels der Durchflussreguliereinrichtung 29 auf niedrigere Werte. Das Luftverhältnis λ wird dabei so eingestellt, dass die Selbstzündtemperatur in der Brennkammer 11 sicher überschritten bleibt. Eventuell noch nötige Luft für die vollständige Oxidation noch vorhandenen Restbrennstoffs in der Heizkammer 12 wird wiederum für die Leitung 17 zugeführt.

Bei extremer Schwachlast kann die Steuerung von dem bislang beschriebenen unterstöchiometrischen Betrieb der Brennkammer 11 in überstöchiometrischen Betrieb derselben übergehen, wie in Figur 4 auf dem linken Teil der Abszisse oberhalb des Luftverhältnisgrenzwerts λ₂ veranschaulicht ist. Während bei unterstöchiometrischen Betrieb mit Verminderung des Luftverhältnisses λ eine Temperaturerniedrigung erzielt wurde, wird nun bei überstöchiometrischen Betrieb mit einer Erhöhung des Luftverhältnisses λ eine Temperaturverminderung erzielt. Die Regelung 28 wirkt in diesem Bereich einer zu hohen Temperatur mit einer Vergrößerung des Luftverhältnisses und einer zu niedrigen Temperatur der Brennkammer 11 mit einer Verminderung des Luftverhältnisses entgegen.

Den Bereich zwischen den beiden Grenzwerten λ₁ und λ₂ meidet die Steuerung 28 zumindest sobald die Brennkammer 11 aufgeheizt ist, indem sie diesen Bereich beim Umschalten von unterstöchiometrischem Betrieb zu überstöchiometrischem Betrieb in kurzer Zeit durchläuft oder ohne Übergang vom unterstöchiometrischen Betrieb in überstöchiometrischen Betrieb (und umgekehrt) umschaltet. Dadurch wird das Ansteigen der Temperatur in der Brennkammer 11 über einen kritischen Grenzwert von zum Beispiel 1300°C oder 1400°C und die damit einhergehende thermische NOx-Bildung vermieden.

An den vorgestellten Ausführungsformen sind zahlreiche Abwandlungen möglich. Beispielsweise kann die Luftvorwärmung mittels des Wärmetauschers 23 auf die über die Leitung 15 der Brennkammer 11 zugeführte Luft beschränkt sein. Alternativ kann die Luftvorwärmung auf die der Heizkammer 12 über die Leitung 17 zugeführte Luft beschränkt sein. Es ist auch möglich, über die Leitung 15 und/oder die Leitung 17 ein Gemisch aus vorgewärmter und nicht vorgewärmter Luft zuzuführen. Weiter ist zumindest prinzipiell auch eine Vorwärmung des über die Leitung 14 der Brennkammer 11 zugeführten Brennstoffs möglich. Außerdem kann insbesondere für einen unterstöchiometrischen Betrieb der Brennkammer 11 eine zusätzliche Brennstoffzuführung für die Heizkammer 12 vorgesehen sein, um einen vergrößerten Teil der Wärmeerzeugung in der Heizkammer 12 zu bewirken. Bei allen vorgestellten Ausführungsformen wird es jedoch als vorteilhaft angesehen, den überwiegenden Teil der Wärmeerzeugung in der Brennkammer 11 mittels flammenloser Oxidation zu bewirken. Die weitere Oxidation kann in der Heizkammer 12 mit oder ohne Flamme durchgeführt werden, wobei die flammenlose Oxidation die Senkung der Stickoxiderzeugung auf Werte unter 10 mg pro m³ ermöglicht.

Bei dem erfindungsgemäßen Verfahren zum Beheizen einer Heizkammer 12 mit einer unterhalb der Selbstzündtemperatur des verwendeten Brennstoffs liegenden Temperatur wird eine Brennkammer 11 vorgesehen, in der Brennstoff und Luft in flammenloser Oxidation in einem nicht stöchiometrischen Mischungsverhältnisses miteinander in Reaktion gebracht werden. Das Luftverhältnis λ ist dabei mindestens so weit von dem stöchiometrischen Verhältnis λ=1 entfernt, dass in der Brennkammer 11 eine Temperatur, ab der eine thermische Stickoxiderzeugung beginnt, nicht überschritten wird. Diese Temperatur liegt beispielsweise bei 1300°C bis 1400°C. Andererseits wird das Luftverhältnis λ so festgelegt, dass die Selbstzündtemperatur des verwendeten Brennstoffs in der Brennkammer 11 sicher überschritten wird. Es ergeben sich somit zwei zulässige Luftverhältnisbereiche, nämlich ein erster Bereich zwischen λₘᵢₙ und λ₁ in unterstöchiometrischen Betreib und ein zweiter Bereich λ₂ bis λₘₐₓ im überstöchiometrischen Betrieb der Brennkammer 11. Die aus der Brennkammer 11 entlassenen noch reaktionsfähigen Gase werden in einer Zone der Heizkammer 12 mit Zusatzluft und/oder zusätzlichem Brennstoff zur Reaktion gebracht, wobei dies vorzugsweise mit flammenloser Oxidation erfolgt. Die genannte Zone ist insbesondere innerhalb des Gasstrahls 21 ausgebildet. Durch die flammenlose Oxidation wird auch in der Heizkammer 12 eine thermische Stickoxyderzeugung vermieden.

### Bezugszeichen

- 10: Einrichtung
- 11: Brennkammer
- 12: Heizkammer
- 13: Heizschlange
- 14: Brennstoffleitung
- 15: Luftleitung
- 16: Reaktionsgasübertritt
- 17: Leitung
- 18: Abgasleitung
- 19-a: Strömungsleiteinrichtung
- 19: Rezirkulationswirbel
- 20: Luft
- 21: Gasstrahl
- 22: Anlage
- 23: Wärmetauscher
- 24: Auslass
- 25: Frischlufteinlass
- 26, 27: Durchflussreguliereinrichtung
- 28: Steuerung
- λ: Luftverhältnis
- λ₁, λ₂, λₘᵢₙ, λₘₐₓ, λᵥ: Grenzwerte für das Luftverhältnis
- 29: Durchflussreguliereinrichtung
- 30: Temperatursensor

## Patentansprüche

1. Verfahren zur Beheizung einer Heizkammer (12), deren Temperatur auch unterhalb der Selbstzündtemperatur des verwendeten Brennstoffs liegen kann, bei dem Brennstoff und Luft in nichtstöchiometrischem Verhältnis in einer Brennkammer (11) zur Reaktion gebracht und ohne Nutzwärmeauskopplung als Reaktionsgas in die Heizkammer (12) übergeleitet werden und das Reaktionsgas in der Heizkammer unter bedarfsweiser Zugabe von Luft und/oder Brennstoff vollständig oxidiert wird, **dadurch gekennzeichnet dass** die Reaktion eine flammenlose Oxidation ist.

2. Verfahren nach Anspruch 1, **dadurch gekennzeichnet, dass** die Oxidation in der Heizkammer (12) mit Flammenbildung durchgeführt wird.

3. Verfahren nach Anspruch 1, **dadurch gekennzeichnet, dass** die Oxidation in der Heizkammer (12) durch Gasführung mit großräumiger Rezirkulation ohne Flammenbildung durchgeführt wird.

4. Verfahren nach einem der vorstehenden Ansprüche, **dadurch gekennzeichnet, dass** in der Brennkammer (11) ein solches nichtstöchiometrisches Brennstoff/LuftVerhältnis eingestellt wird, dass in der Brennkammer (11) eine Temperatur von 1400°C nicht überschritten wird.

5. Verfahren nach einem der vorstehenden Ansprüche, **dadurch gekennzeichnet, dass** in der Brennkammer (11) mittels Einstellung oder Regelung des Brennstoff/LuftVerhältnisses eine zwischen 1000°C und 1300°C liegende Temperatur eingestellt wird.

6. Verfahren nach einem der vorstehenden Ansprüche, **dadurch gekennzeichnet, dass** die Brennkammer (11) im Volllastbetrieb unterstöchiometrisch (λ<1) und im Teillastbetrieb überstöchiometrisch (λ>1) betrieben wird.

7. Verfahren nach Anspruch 6, **dadurch gekennzeichnet, dass** zwischen dem Brennstoff/Luft-Verhältnis im überstöchiometrischen Betrieb und dem Brennstoff/LuftVerhältnis im unterstöchiometrischen Betrieb ein Bereich (λ₁, λ₂) von ungenutzten Brennstoff/Luft-Verhältnissen festgelegt ist.

8. Verfahren nach einem der vorstehenden Ansprüche, **dadurch gekennzeichnet, dass** der Heizkammer (12) Nutzwärme entnommen wird.

9. Einrichtung (10) zur Beheizung einer Heizkammer (12), mit einer adiabaten Brennkammer (11), die wenigstens eine Luftzuführeinrichtung (15), mindestens eine Brennstoffzufuhreinrichtung (14) sowie mindestens einen Ausgang (16) aufweist, mit einer Heizkammer (12), in die der Ausgang der Brennkammer mündet und die mit einer Zuführeinrichtung für Luft und/oder Brennstoff versehen ist, **dadurch gekennzeichnet dass** die Brennkammer zur flammenlosen Oxidation des Brennstoffs im nichtstöchiometrischen Brennstoff/Luft-Verhältnis eingerichtet ist.

10. Einrichtung nach Anspruch 9, **dadurch gekennzeichnet, dass** die Brennkammer (11) frei von flammenhaltenden Strukturen ausgebildet ist.

11. Einrichtung nach einem der Ansprüche 9 bis 10, **dadurch gekennzeichnet, dass** die Heizkammer (12) mit einer Wärmeauskoppeleinrichtung (13) versehen ist.

12. Einrichtung nach einem der Ansprüche 9 bis 11, **dadurch gekennzeichnet, dass** der Brennkammer (11) und/oder der Heizkammer (12) eine Wärmetauschereinrichtung (23) zur Luftvorwärmung vorgelagert ist.

13. Einrichtung nach einem der Ansprüche 9 bis 12, **dadurch gekennzeichnet, dass** eine Regeleinrichtung zur Regulierung der Brennstoff- und oder Luftzufuhr zu der Brennkammer und/oder der Heizkammer vorgesehen ist, die dazu eingerichtet ist, in der Brennkammern und/oder in der Heizkammer eine festgelegte Temperaturobergrenze nicht zu überschreiten.

14. Einrichtung nach Anspruch 13, **dadurch gekennzeichnet, dass** die Regeleinrichtung dazu eingerichtet ist, zur Temperaturregulierung das Brennstoff/Luft-Verhältnis zu beeinflussen.

## Claims

1. Method for heating a heating chamber (12), the temperature of which may also lie below the spontaneous ignition temperature of the fuel used,
wherein fuel and air are brought to reaction in a non-stoichiometric ratio in a combustion chamber (11) and transferred as a reaction gas into the heating chamber (12) without extraction of useful heat, and
the reaction gas is fully oxidised in the heating chamber by the addition of air and/or fuel as required,
**characterised in that** the reaction is a flameless oxidation.

2. Method according to claim 1, **characterised in that** the oxidation is carried out in the heating chamber (12) with flame formation.

3. Method according to claim 1, **characterised in that** the oxidation is carried out in the heating chamber (12) by the supply of gas with large-area recirculation without flame formation.

4. Method according to any of the preceding claims, **characterised in that** a non-stoichiometric fuel/air ratio is set in the combustion chamber (11) such that a temperature of 1400°C is not exceeded in the combustion chamber (11).

5. Method according to any of the preceding claims, **characterised in that** a temperature between 1000°C and 1300°C is set in the combustion chamber (11) by means of adjustment or regulation of the fuel/air ratio.

6. Method according to any of the preceding claims, **characterised in that** the combustion chamber (11) is operated sub-stoichiometrically (λ<1) in full-load mode and super-stoichiometrically (λ>1) in part-load mode.

7. Method according to claim 6, **characterised in that** a range (λ₁, λ₂) of unused fuel/air ratios is established between the fuel/air ratio in super-stoichiometric operation and the fuel/air ratio in sub-stoichiometric operation.

8. Method according to any of the preceding claims, **characterised in that** useful heat is extracted from the heating chamber (12).

9. Device (10) for heating a heating chamber (12), with an adiabatic combustion chamber (11) which has at least one air supply device (15), at least one fuel supply device (14), and at least one outlet (16),
with a heating chamber (12) into which the outlet (16) from the combustion chamber opens and which is provided with a supply device for air and/or fuel,
**characterised in that** the combustion chamber is configured for flameless oxidation of the fuel in a non-stoichiometric fuel/air ratio.

10. Device according to claim 9, **characterised in that** the combustion chamber (11) is designed free from flame-holding structures.

11. Device according to any of claims 9 to 10, **characterised in that** the heating chamber (12) is provided with a heat extraction device (13).

12. Device according to any of claims 9 to 11, **characterised in that** a heat exchanger device (23) for air preheating is arranged upstream of the combustion chamber (11) and/or the heating chamber (12).

13. Device according to any of claims 9 to 12, **characterised in that** a regulator device is provided for regulating the supply of fuel and/or air to the combustion chamber and/or the heating chamber, and is configured such that an established upper limit temperature is not exceeded in the combustion chambers and/or in the heating chamber.

14. Device according to claim 13, **characterised in that** the regulator device is configured to influence the fuel/air ratio in order to regulate the temperature.

## Revendications

1. Procédé de chauffage d'une chambre de chauffe (12) dont la température peut aussi se situer au-dessous de la température d'auto-inflammation du combustible employé,
dans lequel du combustible et de l'air sont mis en réaction dans un rapport non stoechiométrique dans une chambre de combustion (11) et transférés dans la chambre de chauffe (12) comme gaz de réaction sans découplage de chaleur utile et
le gaz de réaction est entièrement oxydé dans la chambre de chauffe avec apport si nécessaire d'air et/ou de combustible,
**caractérisé en ce que** la réaction est une oxydation sans flamme.

2. Procédé selon la revendication 1, **caractérisé en ce que** l'oxydation dans la chambre de chauffe (12) est réalisée avec formation de flamme.

3. Procédé selon la revendication 1, **caractérisé en ce que** l'oxydation dans la chambre de chauffe (12) est réalisée sans formation de flamme par adduction de gaz avec recirculation à grande échelle.

4. Procédé selon une des revendications précédentes, **caractérisé en ce que** dans la chambre de combustion (11) est instauré un rapport combustible/air non stoechiométrique tel que dans la chambre de combustion (11) ne soit pas dépassée une température de 1 400 °C.

5. Procédé selon une des revendications précédentes, **caractérisé en ce qu'**une température située entre 1 000 °C et 1 300 °C est instaurée dans la chambre de combustion (11) au moyen du réglage ou de la régulation du rapport combustible/air.

6. Procédé selon une des revendications précédentes, **caractérisé en ce que** la chambre de combustion (11) fonctionne de façon sous-stoechiométrique (**λ**<1) en fonctionnement à pleine charge et de façon sur-stoechiométrique (**λ**>1) en fonctionnement à charge partielle.

7. Procédé selon la revendication 6, **caractérisé en ce qu'**entre le rapport combustible/air en fonctionnement sur-stoechiométrique et le rapport combustible/air en fonctionnement sous-stoechiométrique est définie une plage (**λ**₁, **λ**₂) de rapports combustible/air inutilisés.

8. Procédé selon une des revendications précédentes, **caractérisé en ce que** la chaleur utile est prélevée sur la chambre de chauffe (12).

9. Équipement (10) de chauffage d'une chambre de chauffe (12), comprenant une chambre de combustion adiabatique (11) qui comporte au moins un équipement d'alimentation en air (15), au moins un équipement d'alimentation en combustible (14) ainsi qu'au moins une sortie (16), comprenant une chambre de chauffe (12) dans laquelle débouche la sortie de la chambre de combustion et qui est munie d'un équipement d'alimentation en air et/ou en combustible, **caractérisé en ce que** la chambre de combustion est agencée pour oxyder le combustible sans flamme dans un rapport combustible/air non stoechiométrique.

10. Équipement selon la revendication 9, **caractérisé en ce que** la chambre de combustion (11) est conçue sans structures de stabilisation de flamme.

11. Équipement selon une des revendications 9 à 10, **caractérisé en ce que** la chambre de chauffe (12) est munie d'un équipement de découplage de chaleur (13).

12. Équipement selon une des revendications 9 à 11, **caractérisé en ce qu'**en amont de la chambre de combustion (11) et/ou de la chambre de chauffe (12) est disposé un équipement d'échange de chaleur (23).

13. Équipement selon une des revendications 9 à 12, **caractérisé en ce que** pour réguler l'alimentation en combustible et/ou en air de la chambre de combustion et/ou de la chambre de chauffe est prévu un équipement de régulation qui est agencé pour ne pas dépasser une limite supérieure de température prescrite dans la chambre de combustion et/ou dans la chambre de chauffe.

14. Équipement selon la revendication 13, **caractérisé en ce que** l'équipement de régulation est agencé pour influer sur le rapport combustible/air dans le but de réguler la température.
